# EUROPEAN PATENT SPECIFICATION

(11) **EP 2 433 814 B1**
(45) Date of publication and mention of the grant of the patent: **14.05.2014**
(21) Application number: 11181605.4
(22) Date of filing: 16.09.2011
(51) Int. Cl.: B60C 9/20, B60C 9/00, D07B 1/06

(54) **Tires with high strengh reinforcement**
Reifen mit hochfester Verstärkung
Pneus avec renfort haute résistance

(30) Priority: 22.09.2010 US 887580; 22.09.2010 US 887604; 22.09.2010 US 887626; 22.09.2010 US 887683; 22.09.2010 US 887721
(43) Date of publication of application: 28.03.2012
(73) Proprietor: The Goodyear Tire & Rubber Company, Akron, OH 44316-0001 (US)
(72) Inventor: Imhoff, Serge Julien Auguste, L-9184 Schrondweiler (LU); Hardy, Anthony, L-7730 Colmar-Berg (LU); Duval, Yann Bernard, L-7724 Walferdange (LU); Starinshak, Thomas Walter, Murrells Inlet, SC South Carolina 29576 (US); Wyszynski, Robert Paul, Akron, OH Ohio 44313 (US); Matrana, Barry Allen, Akron, OH Ohio 44313 (US); Kish, James Christopher, Akron, OH Ohio 44319 (US); Shuttleworth, Derek, Medina, OH Ohio 44256 (US); Assaad, Mahmoud Cherif, Copley, OH Ohio 44321 (US)
(74) Representative: Kutsch, Bernd

(56) References cited:
- EP-A2- 1 745 944
- EP-A2- 1 801 283
- US-A1- 2004 016 497
- US-B1- 6 705 370

## Description

### Field of the Invention

The present invention relates to a pneumatic tire, and more particularly, to a reinforcement for a pneumatic tire.

### Background of the Invention

Reinforced elastomeric articles are well known. For example, conveyor or like type belts, tires, etc., are constructed with cords of textile and/or fine steel wire filaments or strands. In particular, belts used in pneumatic tires are constructed of up to eight ply layers with the cord reinforcement of adjacent plies being biased with respect to the direction of movement of the tire where it is desired to reinforce in both the lateral direction and the direction of rotation of the tire. Further, cords made of strands of multi-twisted filaments of fine wire with a single strand construction having two or more filaments and a wrap filament thereabout to reinforce the cord structure are known.

In some cases, the reinforcement includes the use of single strand cords of multi-filaments which are not twisted about each other but rather twisted altogether as a bundle or bunch (bunched cord) to simplify the cord construction. Higher fatigue life requirements for composites in tires have resulted in cords with smaller filament diameter, requiring more filaments in the cord to obtain the necessary strength.

Conventional two ply tire belt structures for passenger and light truck tires may have cords of 2 x 0.255 ST and 2 + 2 x 0.32-0.40 ST, respectively. This designation means one cord of two 0.255 mm diameter filaments and one cord of four 0.32-0.40 mm diameter filaments (with two filaments twisted at a shorter lay length than the other two filaments), respectively. Multi-filament cords such as 2 + 2 x 0.32-0.40 ST have been found necessary to meet the higher demand for strength of composites in tire belts, such as in light truck applications. Both of these cords are made of super tensile (ST) steel as defined hereinafter. Though cord designs incorporating super tensile (ST) steel have proven effective, there is a continuing need to develop lighter weight cord constructions with improved characteristics, such as higher corrosion propagation resistance and improved tire performance, over conventional high tensile (HT) and super tensile (ST) constructions.

These conventional cord constructions generally have not found use in larger tires, such as off-the-road (OTR) tires. Large OTR tires conventionally use constructions such as 7 x 7 x 0.25 + 1 HT and 3 x 7 x 0.22 HT comprising seven strands each of seven 0.25 mm diameter high tensile (HT) filaments that are twisted together and spiral-wrapped; and three strands each of seven 0.22 mm diameter high tensile (HT) filaments that are twisted together, respectively. One conventional steel cord cable used for ply reinforcement in OTR tires for sizes 36R51 and larger is stranded cord of high tensile (HT) tire cord filament such as 7 x 19 x 0.20 + 1 HT cord comprising seven strands each of nineteen 0.20 mm diameter high tensile (HT) filaments that are twisted together and spiral-wrapped.

OTR tires may also be constructed of multiple belts or a single belt with reinforcing cords such as 27 x 0.265 ST or 5 + 8+ 14 x 0.265 + 1 ST. Still, conventional steel cord constructions have breaking load and cable gauge limitations preventing the needed design 2.54 cm-strength from being achieved for tires larger than 40R57 used on trucks and earthmovers weighing up to and sometimes more than 320 tons. In addition, there is a need to increase the rivet area in the ply and belt, i.e., the space between the cords, for tire sizes of 36R51 and larger so that more rubber may penetrate between the cords during tire manufacture to enhance the quality of calendered treatment by preventing "weak rivet" or "loose coat" (which can result in trapped air in tires).

The higher strength steel alloys have resulted in changes in yield strength giving rise to the possibility of adjusting the parameters of a tire belt gross load, which depends upon three factors assuming adequate cord to rubber adhesion. The factors are cord modulus, the ratio of cord volume to rubber volume (often expressed as the number of cord ends per 2.54 cm (epi)), and the angle of cord reinforcement. Further, as the angle of cord reinforcement approaches the direction of rotation of the tire, the support from the reinforcement in the lateral direction moves toward zero. An increase in the above-mentioned two other cord related factors, i.e., the cord modulus and the ratio of cord volume to rubber volume, generally results in an increase of weight for the belt. Added weight can mean added cost, higher rolling resistance, and lower fuel economy of a tire. Simply using lighter cords with a lower modulus does not solve the problem because, even though they have lower weight, the lower cord modulus must be offset by increasing the ratio of cord to rubber volume. This increase in cord volume is limited by the physical size of the cord and the resulting spacing between the cords, which governs the amount of rivet, i.e., the ability of the rubber to penetrate between the cords for good cord to rubber adhesion.

EP-A- 1 801 283 describes a tire comprising a belt structure comprising Mega Tensile Steel reinforcing cords in accordance with the preamble of claim 1.

US-A- 2004/0016497 and US-B1- 6,705,370 each describe a tire comprising a belt comprising Ultra Tensile Steel reinforcing cords.

EP-A- 1 745 944 describes a tire comprising a belt structure comprising Super Tensile Steel reinforcing cords.

### Definitions

"Belt structure" means one or at least two annular layers or plies of parallel cords, woven or unwoven, underlying the tread, unanchored to the bead, and having cords preferably inclined respect to the equatorial plane of the tire. The belt structure may also include plies of parallel cords inclined at relatively low angles, acting as restricting layers.

"Cord" means one of the reinforcement strands which a reinforcement structure of a tire comprises.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Density" means weight per unit length.

"Fiber" is a unit of matter, either natural or man-made that forms the basic element of filaments. It has a length of at least 100 times its diameter or width.

"Filament count" means the number of filaments that make up a yarn. Example: 1000 denier polyester has approximately 190 filaments.

"High Tensile Steel (HT)" means a carbon steel with a tensile strength of at least 3400 MPa @ 0.20 mm filament diameter.

"LASE" is load at specified elongation.

"Lay length" means the distance at which a twisted filament or strand travels to make a 360 degree rotation about another filament or strand.

"Mega Tensile Steel (MT)" means a carbon steel with a tensile strength of at least 4500 MPa @ 0.20 mm filament diameter.

"Normal Tensile Steel (NT)" means a carbon steel with a tensile strength of at least 2800 MPa @ 0.20 mm filament diameter.

"Ply" means a cord-reinforced layer of rubber-coated radially deployed or otherwise parallel cords.

"Radial" and "radially" are used to mean directions radially toward or away from the axis of rotation of the tire.

"Rivet" means an open space between cords in a layer.

"Super Tensile Steel (ST)" means a carbon steel with a tensile strength of at least 3650 MPa @ 0.20 mm filament diameter.

"Tenacity" is stress expressed as force per unit linear density of the unstrained specimen (gm/tex or gm/denier). Used in textiles.

"Tensile" is stress expressed in forces/cross-sectional area. Strength in psi=12,800 times specific gravity times tenacity in grams per denier.

"Ultra Tensile Steel (UT)" means a carbon steel with a tensile strength of at least 4000 MPa @ 0.20 mm filament diameter.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a tire in accordance with claim 1.

Dependent claims refer to preferred embodiments of the invention.

Another pneumatic tire in accordance with the present invention includes a carcass, two sidewalls spaced apart a distance, two beads, a tread disposed radially outward of a crown of the carcass, and a belt structure radially interposed between the tread and the carcass. The belt structure has MT steel reinforcing cords. The cords have filaments with diameters ranging from 0.18 mm to 0.22 mm.

Another pneumatic tire in accordance with the present invention includes a carcass, two sidewalls spaced apart a distance, two beads, a tread disposed radially outward of a crown of the carcass, and a belt structure radially interposed between the tread and the carcass. The belt structure has MT steel reinforcing cords. The cords have filaments with diameters ranging from 0.08 mm to 0.21 mm.

### Brief Description of the Drawings

FIG. 1 is a schematic representation of a cross section of an example embodiment of a pneumatic tire for use with the present invention;
FIG. 2 is a schematic representation of a partial cross section of a second example embodiment of a pneumatic tire for use with the present invention;
FIG. 3 is a schematic representation of a cross section of an example reinforcing cord in accordance with the present invention;
FIG. 4 is a schematic representation of a cross section of another example reinforcing cord in accordance with the present invention;
FIG. 5 is a schematic representation of a cross section of still another example reinforcing cord in accordance with the present invention;
FIG. 6 is a schematic representation of a cross section of yet another example reinforcing cord in accordance with the present invention.
FIG. 7 is a schematic representation of a cross section of an example reinforcing cord in accordance with the present invention;
FIG. 8 is a schematic representation of a cross section of another example reinforcing cord in accordance with the present invention;
FIG. 9 is a schematic representation of a cross section of still another example reinforcing cord in accordance with the present invention;
FIG. 10 is a schematic representation of a cross section of yet another example reinforcing cord in accordance with the present invention;
FIG. 11 is a schematic representation of a cross section of still another example reinforcing cord in accordance with the present invention;
FIG. 12 is a schematic representation of a cross section of yet another example reinforcing cord in accordance with the present invention;
FIG. 13 is a schematic representation of a cross section of still another example reinforcing cord in accordance with the present invention;
FIG. 14 is a schematic representation of a cross section of yet another example reinforcing cord in accordance with the present invention;
FIG. 15 is a schematic representation of a cross section of still another example reinforcing cord in accordance with the present invention.
FIG. 16 is a schematic representation of a cross section of an example reinforcing cord in accordance with the present invention;
FIG. 17 is a schematic representation of a cross section of another example reinforcing cord in accordance with the present invention;
FIG. 18 is a schematic representation of a cross section of still another example reinforcing cord in accordance with the present invention;
FIG. 19 is a schematic representation of a cross section of yet another example reinforcing cord in accordance with the present invention;
FIG. 20 is a schematic representation of a cross section of still another example reinforcing cord in accordance with the present invention;
FIG. 21 is a schematic representation of a cross section of yet another example reinforcing cord in accordance with the present invention;
FIG. 22 is a schematic representation of a cross section of still another example reinforcing cord in accordance with the present invention;
FIG. 23 is a schematic representation of a cross section of yet another example reinforcing cord in accordance with the present invention;
FIG. 24 is a schematic representation of a cross section of still another example reinforcing cord in accordance with the present invention; and
FIG. 25 is a schematic representation of a cross section of yet another example reinforcing cord in accordance with the present invention.

### Detailed Description of Example Embodiments of the Present Invention

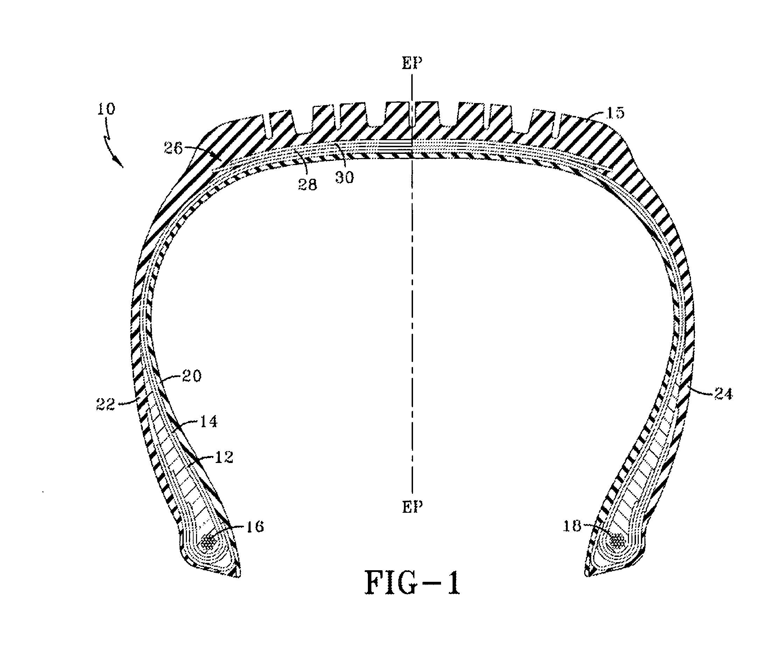

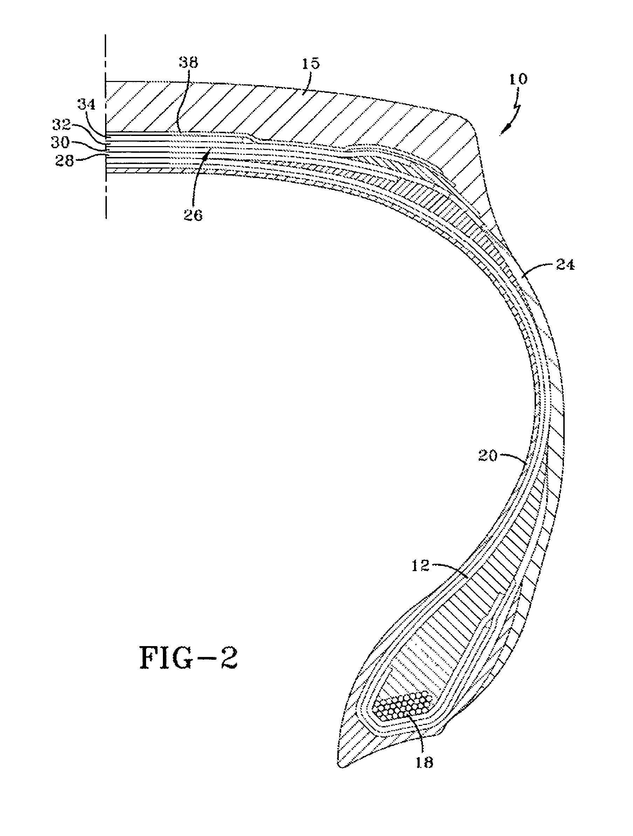

Referring to FIGS. 1 and 2, plies 12, 14 are shown within an example pneumatic tire 10 with a radial carcass wherein like elements have received like reference numerals. The example tire 10 has a radial ply carcass structure when the cords of the carcass reinforcing ply, or plies 12, 14 are oriented at angles in the range of 75° to 90° with respect to the equatorial plane (EP) of the example tire.

Either ply 12, 14 may be reinforced with the metallic cords, rayon, polyester, nylon, or any other suitable reinforcement. The metallic cord reinforced carcass ply 12 or 14 may have a layer of steel cords arranged so as to have from about 8 to about 20 ends per 2.54 cm (EPI) when measured in a tire circumferential direction at a location having a maximum width MW. For example, the layer of steel cords may be arranged so as to have about 12 to about 16 ends per 2.54 cm (EPI) at the location having the maximum width MW. In terms of metric units, the steel cords may be arranged as to have from 3 to 8 ends per cm (EPC) when measured in a tire circumferential direction at the location having a the tire maximum width MW. A high number of ends per inch may include the use of a lower diameter wire for a given strength versus a low number of ends per 2.54 cm for a higher diameter wire for the same strength.

The pneumatic tire 10 may have a pair of substantially inextensible annular beads 16, 18, which are axially spaced apart from one another. Each of the beads 16, 18 may be located in a bead portion of the pneumatic tire 10, which has exterior surfaces configured to be complimentary to the beads and retaining flanges of a rim (not shown) upon which the pneumatic tire is designed to be mounted. Plies 12, 14 may be of side-by-side reinforcing cords of polyester, steel, or other suitable material and extend between the beads 16, 18 with an axially outer portion of the carcass structure folded about each of the beads. The carcass ply structure of FIG. 1 comprises two plies 12, 14 of reinforcing material. One or more carcass plies of any suitable material may be employed.

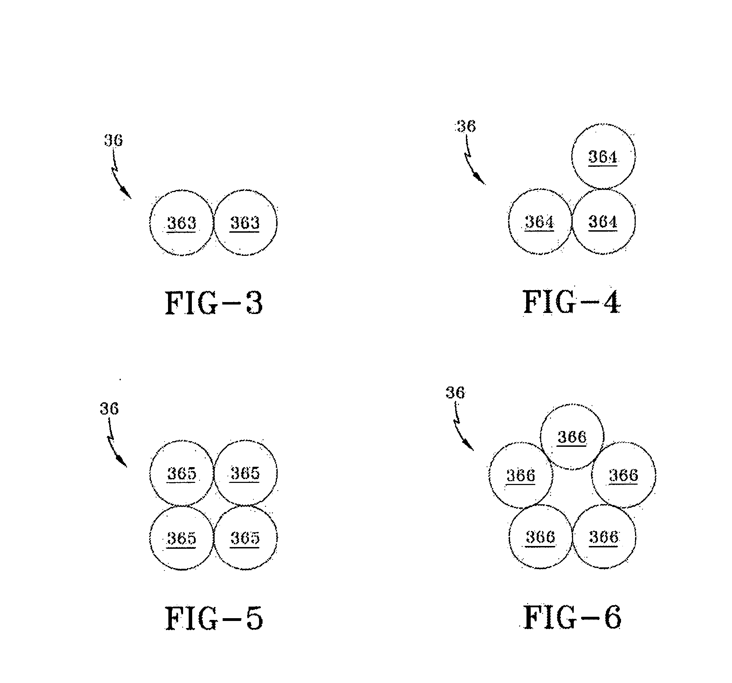

A layer of a low permeability material 20 may be disposed inwardly of the carcass plies 12, 14, and contiguous to an inflation chamber defined by the pneumatic tire 10 and rim. Elastomeric sidewalls 22, 24 may be disposed axially outward of the carcass structure 12, 14. A circumferentially extending belt structure 26 of two layers of belts 28, 30 (FIG. 1), or four layers of belts 28, 30, 32, 34 (FIG. 2), may include steel reinforcing cords 36 as shown in FIG. 3. The belt structure 26 may also include an overlay 38 interposed radially between the belts 28, 30, 32, 34 and the tread 15 (FIG. 2).

The belt structure 26 of FIGS. 1 and 2 may, in accordance with the present invention, be characterized by the example cords 36 having filaments of Mega Tensile Steel (MT) (as defined above) with diameters in the range of 0.08 mm to 0.22 mm and appropriate lay lengths. For example, the cord 36 of FIG. 3 may have a construction of 2x filaments 363. The example cord 36 of FIG. 4 may have a construction of 2+1 filaments 364. The example cord 36 of FIG. 5 may have a construction of 2+2 filaments 365. The example cord 36 of FIG. 6 may have a construction of 5x filaments 366.

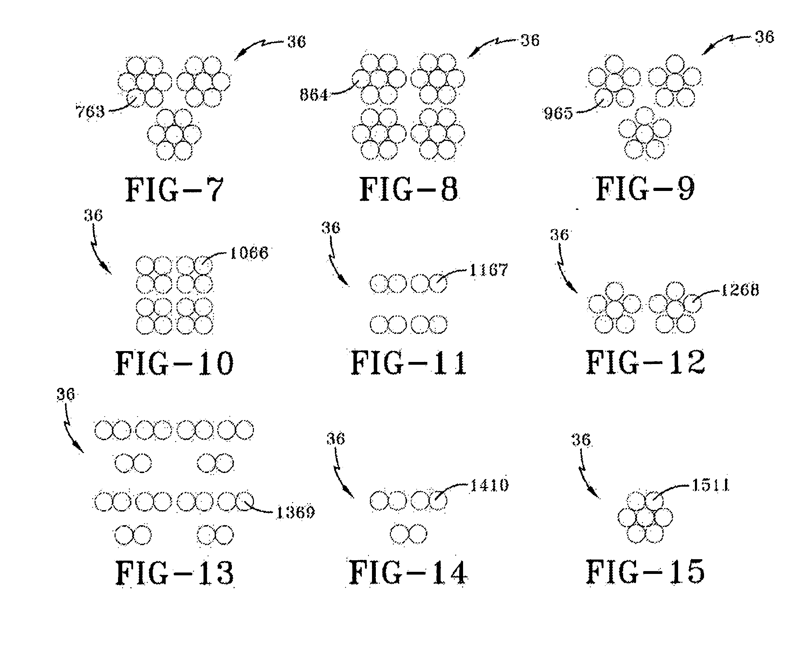

The belt structure 26 of FIGS. 1 and 2 may be characterized by the example cords 36 having filaments of Mega Tensile Steel (MT) (as defined above) with diameters in the range of 0.08 mm to 0.22 mm and appropriate lay lengths. For example, the cord 36 of FIG. 7 may have a construction of 3x7, or 3x1/6, filaments 763. The example cord 36 of FIG. 8 may have a construction of 4x7, or 4x1/6, filaments 864. The example cord 36 of FIG. 9 may have a construction of 3x6, or 3x1/5, filaments 965. The example cord 36 of FIG. 10 may have a construction of 4x4 filaments 1066. The example cord 36 of FIG. 11 may have a construction of 4x2 filaments 1167. The example cord 36 of FIG. 12 may have a construction of 4x6, or 4x1/5, filaments 1268. The example cord 36 of FIG. 13 may have a construction of 4x(3x2) filaments 1369. The example cord 36 of FIG. 14 may have a construction of 3x2 filaments 1410. The example cord 36 of FIG. 15 may have a construction of 7x, or 1/6, filaments 1511.

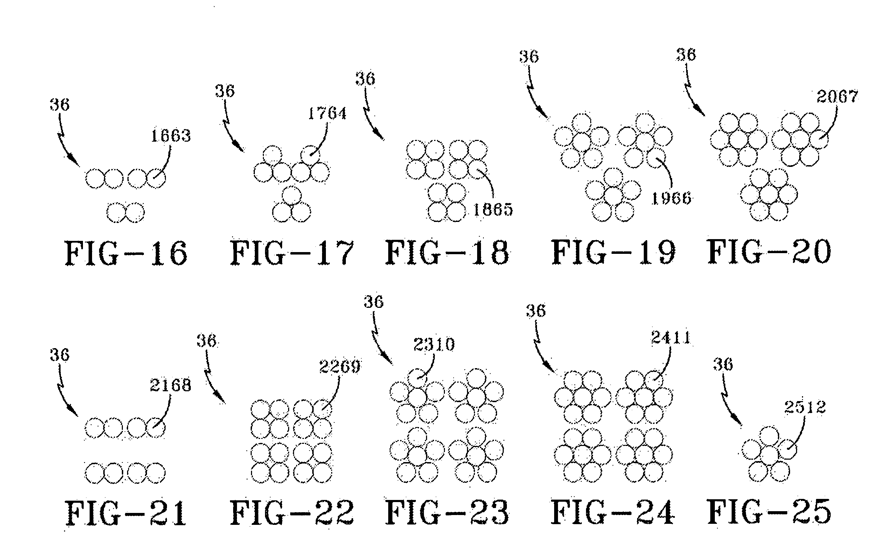

The belt structure 26 of FIGS. 1 and 2 may be characterized by the example cords 36 having filaments of Mega Tensile Steel (MT) (as defined above) with diameters in the range of 0.08 mm to 0.21 mm and appropriate lay lengths. For example, the cord 36 of FIG. 16 may have a construction of 3x2 filaments 1663. The example cord 36 of FIG. 17 may have a construction of 3x3 filaments 1764. The example cord 36 of FIG. 18 may have a construction of 3x4 filaments 1865. The example cord 36 of FIG. 19 may have a construction of 3x6 filaments 1966. The example cord 36 of FIG. 20 may have a construction of 3x7, or 3x1/6, filaments 2067. The example cord 36 of FIG. 21 may have a construction of 4x2 filaments 2168. The example cord 36 of FIG. 22 may have a construction of 4x4 filaments 2269. The example cord 36 of FIG. 23 may have a construction of 4x6, or 4x1/5, filaments 2310. The example cord 36 of FIG. 24 may have a construction of 4x7, or 4x1/6, filaments 2411. The example cord 36 of FIG. 25 may have a construction of 7x, or 1/6, filaments 2512.

One example method of achieving UT strength may be the merging of the process as disclosed in US-B- 4,960,473, with a carbon rod microalloyed with one or more of the following elements: Cr, Si, Mn, Ni, Cu, V and B. One example construction may be C 0.88 to 1.00, Mn 0.30 to 0.50, Si 0.10 to 0.30, Cr 0.10 to 0.40, V 0 to 0.10, Cu 0 to 0.50, Ni 0 to 0.50, and Co 0.20 to 0.10 with the balance being Fe and residuals. The resulting rod may then be drawn to a tensile strength equivalent to 4000 Mpa @ 0.20 mm.

Comparative example cord structures using 0.30 mm to 0.35 mm diameter UT steel wire may have a cord breaking strength of at least 1,020 Newtons (N), plus or minus 5%. One example structure may have two filaments twisted together with a 16.0 mm lay length and these two filaments are then twisted at a 16.0 mm lay length together in the same twist direction with two other filaments which are untwisted and parallel to each other when twisted together with the twisted filaments. This example cord, a 2+2 construction (FIG. 5), may be designated as 2+2 x 30 UT or 2+2 x 35 UT. The 2+2 construction may exhibit openness and good rubber penetration resulting from the openness. The 0.30 and 0.35 designate the filament diameter in millimeters and the UT designates the material being ultra tensile steel.

The above examples of MT cord structure may perform similar to higher gauge HT and ST steel constructions. Thus, when these example cord structures incorporate filaments having a smaller diameter than those of the HT and ST cord structures, the resulting reduction in gauge material as compared with the HT and ST cord structures results in lighter weight and less costly tires.

Further, for equal filament diameters, the MT cords have higher strength and generally higher fatigue life over the predecessor HT and ST cords. These advantages lead to elastomer products which have less reinforcement material and thus lower weight. Additionally, the life of the product may be increased with the increase in fatigue life of such cords 36 and filaments 363, 364, 365, 366, 763, 863, 963, 1063, 1163, 1263, 1363, 1463, 1563, 1663, 1763, 1863, 1963, 2063, 2163, 2263, 2363, 2463, and 2563 as shown in US-B- 7,082,978.

A parameter which may be varied in a reinforced composite of elastomer is the end count in end per 2.54 cm (EPI), i.e., the number of cords per unit length in the lateral direction to the direction in which the elastomer is being reinforced. The increased strength of the MT samples may allow a reduction in EPI to achieve comparable strength. Alternatively, cord diameter may be reduced and the end count maintained or increased to achieve comparable strength. The penetration may be further enhanced by smaller diameter and simpler (less filaments in a cord) cord constructions made achievable by MT steel filaments.

As stated above, a belt structure 26 of MT steel cords 36 in accordance with the present invention produces excellent fatigue performance in a pneumatic tire 10 as well as allowing use of less material in the belt and other parts of the pneumatic tire 10. This structure 24 thus enhances the performance of the tire pneumatic 10, even though the complexities of the structure and behavior of the pneumatic tire are such that no complete and satisfactory theory has been propounded.

The belt structure cord characteristics affect the other components of a pneumatic tire (i.e., belt structure affects apex, carcass ply, overlay, etc.), leading to a number of components interrelating and interacting in such a way as to affect a group of functional properties (noise, handling, durability, comfort, high speed, and mass), resulting in an unpredictable and complex composite. Thus, changing even one component can lead to directly improving or degrading many functional characteristics, as well as altering the interaction between that one component and other structural components. Whether each of these functional characteristics is improved, degraded, or unaffected, and by what amount, is unpredictable without the experimentation and testing conducted by the inventors.

Thus, for example, when the structure (i.e., twist, cord construction, etc.) of the belt structure of a pneumatic tire is modified with the intent to improve one functional property of the pneumatic tire, a number of other functional properties may be unacceptably degraded. Furthermore, the interaction between the belt structure and the apex, carcass ply, overlay, and tread may also unacceptably affect the functional properties of the pneumatic tire.

Thus, as stated above, the complexity of the interrelationships of the multiple components makes the actual result of modification of a belt structure 26, in accordance with the present invention, impossible to predict or foresee from the infinite possible results. Only through extensive experimentation have the belt structure 26 and cords 363, 364, 365, 366, 763, 863, 963, 1063, 1163, 1263, 1363, 1463, 1563, 1663, 1763, 1863, 1963, 2063, 2163, 2263, 2363, 2463, and 2563 of the present invention been revealed as an excellent option for a pneumatic tire.

## Claims

1. A pneumatic tire comprising a carcass (12, 14), two sidewalls (22, 24) spaced apart a distance, two beads (16, 18), a tread (15) disposed radially outward of a crown of the carcass (12, 14), and a belt structure (26) radially interposed between the tread (15) and the carcass (12, 14), the belt structure (26) having Mega Tensile Steel (MT) reinforcing cords (36), **characterized in that** the cords (36) having filaments with diameters ranging from 0.08 mm to 0.22 mm.

2. The pneumatic tire as set forth in at least one of the previous claims wherein the reinforcing cords (36) have a 2 + 2 construction, a 2 + 1 construction, a 2 x construction, a 5 x construction, a 3 x 7 construction, a 3 x 1/6 construction, a 3 x 6 construction, a 3 x 1/5 construction, a 4 x 7 construction or a 4 x 1/6 construction.

3. The pneumatic tire as set forth in at least one of the previous claims 1 to 3 wherein the reinforcing cords (36) have 4 x 4 construction, a 4 x (3 x 2) construction, a 4 x 2 construction, a 4 x 6 construction, a 4 x 1/5 construction, a 7 x construction, a 1/6 construction, a 3 x 2 construction, a 3 x 3 construction, or a 3 x 4 construction.

4. The pneumatic tire as set forth in claim 1 wherein the MT reinforcing cords (36) have 0.210 mm diameter filaments.

5. The pneumatic tire as set forth in claim 1 wherein the MT reinforcing cords (36) have filaments with diameters ranging from 0.18 mm to 0.22 mm.

## Patentansprüche

1. Luftreifen, umfassend eine Karkasse (12, 14), zwei um einen Abstand voneinander beabstandete Seitenwände (22, 24), zwei Wülste (16, 18), eine radial auswärts von einem Zenit der Karkasse (12, 14) angeordnete Lauffläche (15), und eine radial zwischen die Lauffläche (15) und die Karkasse (12, 14) dazwischengesetzte Gürtelstruktur (26), wobei die Gürtelstruktur (26) Verstärkungskorde (36) aus megazugfestem Stahl (MT) aufweist, **dadurch gekennzeichnet, dass** die Korde (36) Filamente mit Durchmessern im Bereich von 0,08 mm bis 0,22 mm aufweisen.

2. Luftreifen, wie in mindestens einem der vorgenannten Ansprüche dargelegt, wobei die Verstärkungskorde (36) eine 2 + 2-Konstruktion, eine 2 + 1-Konstruktion, eine 2 x-Konstruktion, eine 5 x-Konstruktion, eine 3 x 7-Konstruktion, eine 3 x 1/6-Konstruktion, eine 3 x 6-Konstruktion, eine 3 x 1/5-Konstruktion, eine 4 x 7-Konstruktion oder eine 4 x 1/6-Konstruktion aufweisen.

3. Luftreifen, wie in mindestens einem der vorgenannten Ansprüche 1 bis 3 dargelegt, wobei die Verstärkungskorde (36) eine 4 x 4-Konstruktion, eine 4 x (3 x 2)-Konstruktion, eine 4 x 2-Konstruktion, eine 4 x 6-Konstruktion, eine 4 x 1/5-Konstruktion, eine 7 x-Konstruktion, eine 1/6-Konstruktion, eine 3 x 2-Konstruktion, eine 3 x 3-Konstruktion oder eine 3 x 4-Konstruktion aufweisen.

4. Luftreifen, wie in Anspruch 1 dargelegt, wobei die MT-Verstärkungskorde (36) Filamente mit einem Durchmesser von 0,210 mm aufweisen.

5. Luftreifen, wie in Anspruch 1 dargelegt, wobei die MT-Verstärkungskorde (36) Filamente mit Durchmessern im Bereich von 0,18 mm bis 0,22 mm aufweisen.

## Revendications

1. Bandage pneumatique comprenant une carcasse (12, 14), deux flancs (22, 24) qui sont espacés l'un de l'autre sur une certaine distance, deux talons (16, 18), une bande de roulement (15) disposée en direction radiale à l'extérieur du sommet de la carcasse (12, 14), et une structure de ceinture (26) intercalée en direction radiale entre la bande de roulement (15) et la carcasses (12, 14), la structure de ceinture (26) possédant des câblés de renforcement en acier manifestant une résistance méga élevée à la traction (MT), **caractérisé en ce que** les câblés (36) possèdent des filaments dont les diamètres se situent dans la plage de 0,08 mm à 0,22 mm.

2. Bandage pneumatique selon au moins une des revendications précédentes, dans lequel les câblés de renforcement (36) possèdent une construction 2 + 2, une construction 2 + 1, une construction 2 x, une construction 5 x, une construction 3 x 7, une construction 3 x 1 /6, une construction 3 x 6, une construction 3 x 1/5, une construction 4 x 7, ou une construction 4 x 1/6.

3. Bandage pneumatique selon au moins une des revendications précédentes 1 à 3, dans lequel les câblés de renforcement (36) possèdent une construction 4 x 4, une construction 4 x (3 x 2), une construction 4 x 2, une construction 4 x 6, une construction 4 x 1/5, une construction 7 x, une construction 1/6, une construction 3 x 2, une construction 3 x 3, ou une construction 3 x 4.

4. Bandage pneumatique selon la revendication 1, dans lequel les câblés de renforcement MT (36) possèdent des filaments d'un diamètre de 0,210 mm.

5. Bandage pneumatique selon la revendication 1, dans lequel les câblés de renforcement MT (36) possèdent des filaments dont les diamètres se situent dans la plage de 0,18 mm à 0,22 mm.
